# EUROPEAN PATENT SPECIFICATION

(11) **EP 0 399 886 B1**
(45) Date of publication and mention of the grant of the patent: **07.09.1994**
(21) Application number: 90401341.4
(22) Date of filing: 21.05.1990
(51) Int. Cl.: G11B 17/022, G11B 17/028, G11B 17/03

(54) **Disk loading apparatus**
Plattenladegerät
Appareil de chargement de disques

(30) Priority: 24.05.1989 JP 131803/89
(43) Date of publication of application: 28.11.1990
(73) Proprietor: MITSUBISHI DENKI KABUSHIKI KAISHA, Tokyo (JP)
(72) Inventor: Shimegi, Hiroo, c/o Sangyo Shisutemu Kenkyusho, 8-chome, Amagasaki-shi, Hyogo-Ken (JP)
(74) Representative: Bertrand, Didier

(56) References cited:
- EP-A- 0 269 411
- PATENT ABSTRACTS OF JAPAN, unexamined applications, P field, vol. 12, no. 8, January 12, 1988 THE PATENT OFFICE JAPANESE GOVERNMENT page 27 P 654

## Description

### Field of the Invention

This invention relates to a disk loading apparatus adapted to load or unload a disk to or from a turntable.

EP-A-0 269 411 discloses a disk loading apparatus according to the preambule of Claim 1.

### Description of Related Art

In order to record information in a disk such as an optical disk, a magneto-optical disk, etc., or reproduce data from the disk, the disk loaded on a turntable is rotated at high speeds.

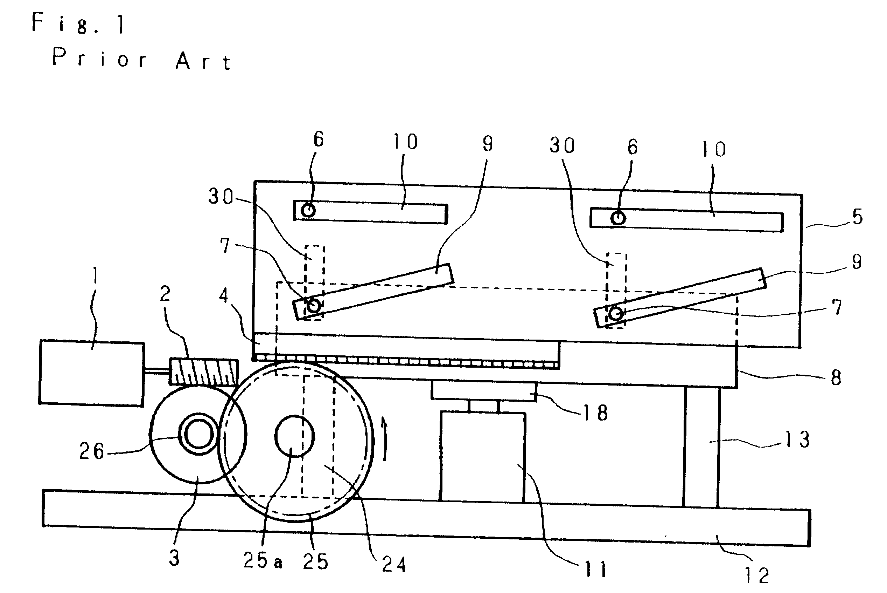

Fig. 1 is a side elevational view of a conventional disk loading apparatus for loading a disk on the turntable. In the disk loading apparatus of Fig. 1, two position pins 13 (only one pin is indicated) are provided standing a distance in a widthwise direction of a base 12 (in a direction from front to reverse surface of the sheet of the drawing) at one side on the base 12. Two guide pins 24 are provided standing in the same manner as the position pins 13 at the other side on the base 12. A disk casing which is held by opposing holders 8 (opposing in the front-to-reverse direction of the sheet of the drawing) as will be described later is mounted around each corner at one side thereof at an upper end of each position pin 13. The guide pins 24 are respectively passed through the disk casing in the vicinity of the corners at the other side of the disk casing as to permit the disk casing to slide. A circular hole (not shown) is formed at the center of a lower surface of the disk casing, inside of which a turntable 18 is installed which is rotated by a disk motor 11 mounted on the base 12.

Two pins 7 of the same height protrude respectively from each outer lateral surface of the opposing holders 8, which are spaced a suitable distance. Moreover, a slider 5 is provided laterally outside of each holder 8. Two elongated holes 10, 10 parallel to an edge in an elongated direction of the slider 5 are formed with a suitable distance each other in the upper part of the slider 5, while two elongated holes 9, 9 are formed with some inclination to the edge of the slider 5 in the elongated direction below the elongated holes 10, 10. An end portion of the hole 9 at the side of the position pin 13 is found upper than the other end portion thereof. The pins 7, 7 are fitted into the elongated holes 9, 9, and pins 6, 6 are fitted into the elongated holes 10, 10. The pins 6, 6 fixed to a support member (not shown) restrict an upward motion of the slider 5 although permitting the slider 5 to move in the elongated direction. A guide plate (not shown) is rigidly mounted between the holder 8 and slider 5, having longitudinal holes 30, 30 orthogonal to the elongated holes 10, 10. The pins 7, 7 are inserted through the longitudinal holes 30, 30, thereby allowing the holder 8 to be movable only in a vertical direction.

A long rack 4 is installed in a lower edge of each slider 5. Each rack 4 is meshed with each gear 25 provided at an axial end portion of a coupling shaft 25a. The one gear 25 is meshed with a pinion 26. Further, a worm wheel 3 coaxial with the pinion 26 is meshed with a worm 2 mounted in a rotary shaft of a loading motor 1.

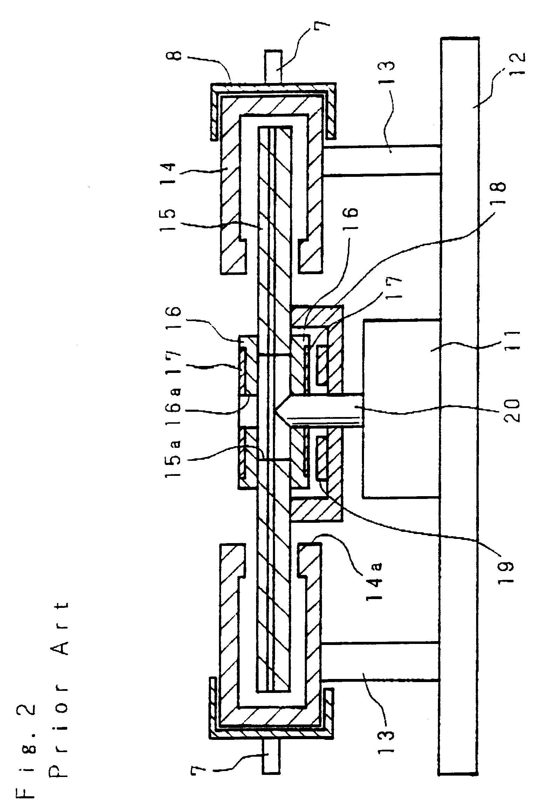

Fig. 2 shows a front sectional view of a main body of the loading apparatus of Fig. 1 when a disk is loaded. A disk casing 14 supported by the holders 8 is a flat box to accommodate a disk 15, having an opening mouth (not shown) at the front side thereof (front surface side on the sheet of the drawing). The turntable 18 is placed in a through hole 14a at the center of the disk casing 14.

The disk 15 accommodated within the disk casing 14 has a through hole 15a at the center thereof. A hub 16 fitted with a magnetic attraction plate 17 is coaxially provided at each face of the disk 15 in such a manner as to block the through hole 15a. A spindle shaft 20 is engaged into a shaft hole 16a at the center of the one hub 16. The disk 15 is in contact with an axial end face of the turntable 18. A circle-shaped permanent magnet 19 is placed at the bottom of the turntable 18 to be coaxial with the spindle axis shaft 20, with a slight gap held between the permanent magnet 19 and the magnetic attraction plate 17. Therefore, when the magnetic attraction plate 17 is applied with an attraction force from the permanent magnet 19, the disk 15 is forcibly pressed to the turntable 18, whereby the disk 15 is loaded.

The operation of the disk loading apparatus of the above-described structure will be discussed hereinbelow with reference to Figs. 1 and 2.

When the loading motor 1 is driven in a normal direction, the worm wheel 3 and pinion 26 are rotated thereby to rotate the gear 25 in a direction shown by an arrow and consequently move the slider 5 towards the loading motor 1. As a result, the pins 7, 7 engaged into the elongated holes 9, 9 are pressed upwards in correspondence to the inclination of the elongated holes 9, 9, so that the holders 8 are moved upwards. In other words, both the disk 15 and the disk casing 14 are separated all together from the turntable 18 in spite of the magnetic attraction force of the permanent magnet 19. Thus, the disk 15 is released from the loading state.

On the other hand, when the disk 15 is to be loaded, the loading motor 1 is rotated in a direction reverse to the earlier-mentioned direction thereby to rotate the gear 25 in a direction opposite to that shown by the arrow. Accordingly, the slider 5 is moved away from the loading motor 1, and the pins 7, 7 are pressed downwards and the holders 8 are moved downwards. The disk 15 and the disk casing 14 are accordingly moved integrally towards the turntable 18, when the spindle shaft 20 is engaged into the shaft hole 16a of the hub 16. At this time, the disk 15 is brought into contact with the turntable 18 into the loading state as the permanent magnet 19 exerts the magnetic attraction force to the magnetic attraction plate 17.

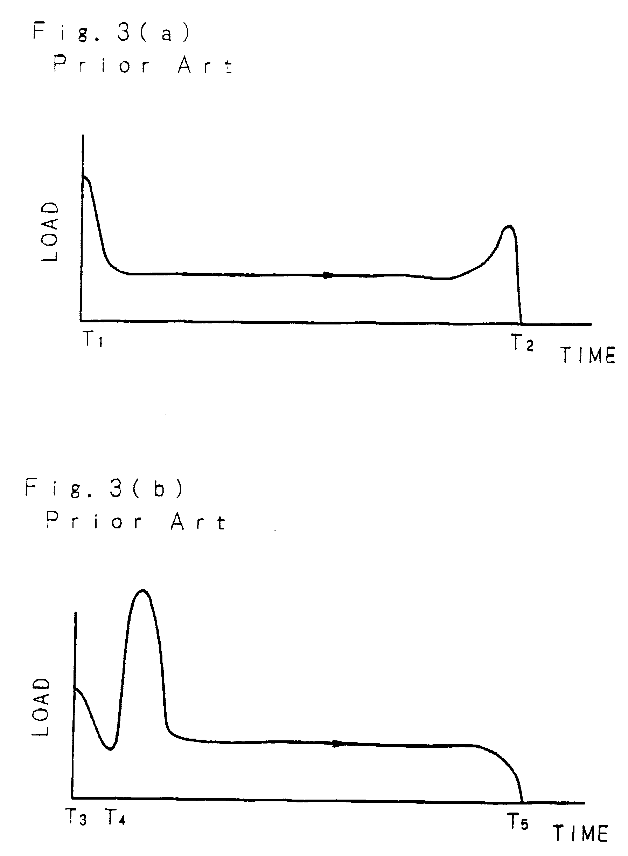

Fig. 3 is a graph showing the change in load of the loading motor, specifically, Fig. 3(a) indicates when the disk is loaded onto the turntable, and Fig. 3(b) indicates when the disk is unloaded from the turntable.

In loading the disk, the holders 8 are moved downwards by the sliders 5. As shown in Fig. 3(a), therefore, the load of the loading motor 1 is suddenly increased at a start point T₁, and then decreased to be approximately constant when the sliders 5 start moving. The load is slightly increased again at a time point T₂ immediately before the disk 15 is completely loaded. When the disk 15 is loaded, the load disappears. In the meantime, when the disk 15 is unloaded, the load of the loading motor 1 is temporarily increased and diminished at a start time T₃ when the holders 8 are moved upwardly by the sliders 5, as is understood from Fig. 3(b). Therefore, at a time point T₄ when the holders 8 are moved upwards against the attraction force of the permanent magnet 19, the load of the loading motor 1 is suddenly increased to indicate a considerably large value. When the resistance against the magnetic force is not effected, the load of the loading motor 1 is decreased to be approximately constant, which finally disappears at a time point T₅ when the disk 15 is unloaded.

As is discussed above, when the disk 15 is to be unloaded, it is necessary in the conventional disk loading apparatus to forcibly separate the disk 15 from the turntable 18 against the total attraction force of the permanent magnet 19 acting on the disk 15. This requires the loading motor 1 of high output, resulting in bulky and costly structure of the apparatus.

Although an increase of the reduction ratio is proposed to obtain a loading motor of low output, such increase reduces the moving amount of the disk 15 per unit hour, elongating the time required for unloading the disk and consuming labor for the exchange of the disk.

### SUMMARY OF THE INVENTION

An essential object of this invention is to provide a disk loading apparatus which realizes an easy loading or unloading of a disk to or from a turntable even with the use of a cheap loading motor of low output.

Another object of this invention is to provide a disk loading apparatus which achieves prompt release of a disk from the loading state.

A further object of this invention is to provide a disk loading apparatus which realizes an exchange of a disk in a short time.

The disk loading apparatus of this invention as defined in the appended claims is provided with a moving mechanism for moving a disk casing in a direction to and from a rotating device (a turntable), a magnet for attracting a disk to the rotating device, and a spring for adding a resistive force against the magnetic force of the magnet to the disk casing.

When the disk casing is moved closer to the rotating device by the action of the moving mechanism, the disk accommodated in the disk casing is loaded to the rotating device because of the attraction force of the magnet. On the other hand, when the disk casing is moved away from the rotating device by the moving mechanism against the attraction force of the magnet, the disk is released from the loading state. At this time, because the spring assists the disk casing with its resistive force against the attraction force of the magnet, the load of the motor of the moving mechanism is reduced, so that the disk can be quickly released from the loading state.

The present invention is defined in the appended claims.

The above and further objects and features of the invention will more fully be apparent from the following detailed description with accompanying drawings.

### BRIEF DESCRIPTION OF THE DRAWINGS

Fig. 1 is a side elevational view of a conventional disk loading apparatus.
Fig. 2 is a front sectional view of a main body of a conventional disk loading apparatus,
Fig. 3 is a graph showing the change in load of the conventional disk loading apparatus,
Fig. 4 is a front sectional view of a main body of a disk loading apparatus according to this invention, and
Fig. 5 is a graph showing the change in load of the disk loading apparatus according to this invention.

### DESCRIPTION OF THE PREFERRED EMBODIMENTS

This invention will be described in detail hereinbelow in conjunction with one preferred embodiment thereof with reference to the accompanying drawings.

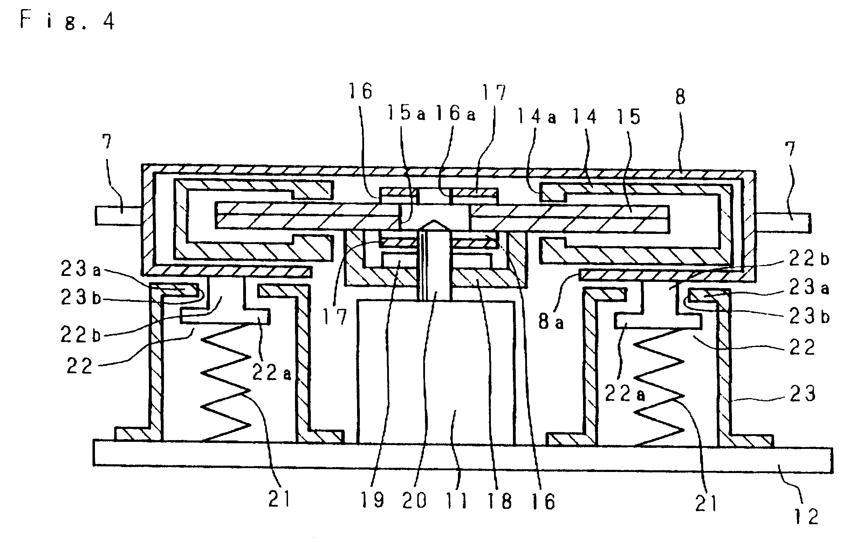

Fig. 4 is a front sectional view of a main body of a disk loading apparatus according to this invention when a disk is accommodated therein. A holder 8 is a flat box generally in a square section, having an opening mouth (not shown) to insert the disk therefrom, for example, at the front side thereof. The holder 8 further has a circular opening portion 8a at the center of a lower surface thereof. Pins 7, 7 protrude outside at respective confronting lateral surfaces of the holder 8. A disk casing 14 is accommodated within the holder 8, which is also a flat box in a square section to accommodate a disk 15. A through hole 14a is opened at the center of the disk casing 14 where a turntable 18 mounted in a spindle shaft 20 of a disk motor 11 on a base 12 is placed.

Cylindrical stoppers 23, 23 fixed to the base 12 are placed at lateral sides of the disk motor 11 below the holder 8. An inner flange 23a at an upper end of each cylindrical stopper 23 defines an opening portion 23b having a diameter smaller than an inner diameter of the cylindrical stopper 23. There are a coil spring 21 and a pad 22 inside each cylindrical stopper 23. The pad 22 is energized by the coil spring 21, so that an end of the pad 22 protrudes from the opening portion 23b into contact with the lower surface of the holder 8. The energizing force of the coil spring 21 is set approximately half the attraction force of a permanent magnet 19. The pad 22 has a columnar portion 22b of a small diameter projecting at one side of a circular plate 22a. The columnar portion 22b is coaxial with the circular plate 22a which has a suitable thickness.

A through hole 15a is formed at the center of the disk 15 accommodated within the disk casing 14. A hub 16 is coaxially provided at each face of the disk 15. Each hub 16 is fitted with a magnetic attraction plate 17 so exposed as to close the through hole 15a. A shaft hole 16a is formed at the center of each hub 16. A spindle shaft 20 is engaged into the shaft hole 16a of the lower hub 16. The disk 15 is in contact with an axial end face of the turntable 18. The earlier-mentioned permanent magnet 19 in circular shape is placed at the bottom of the turntable 18 coaxially with the spindle shaft 20. The magnetic attraction force of the permanent magnet 19 acts on the magnet attraction plate 17 via a small gap therebetween, whereby the disk 15 is strongly pressed against the turntable 18 into the loading state.

Since the structure of the moving mechanism for moving the holder 8 up and down is the same as shown in Fig. 1, the detailed description thereof will be abbreviated here. If, as mentioned earlier, the holder 8 is moved up and down by moving the slider 5 through rotation of the loading motor 1, the disk 15 is brought into the loading state or unloading state.

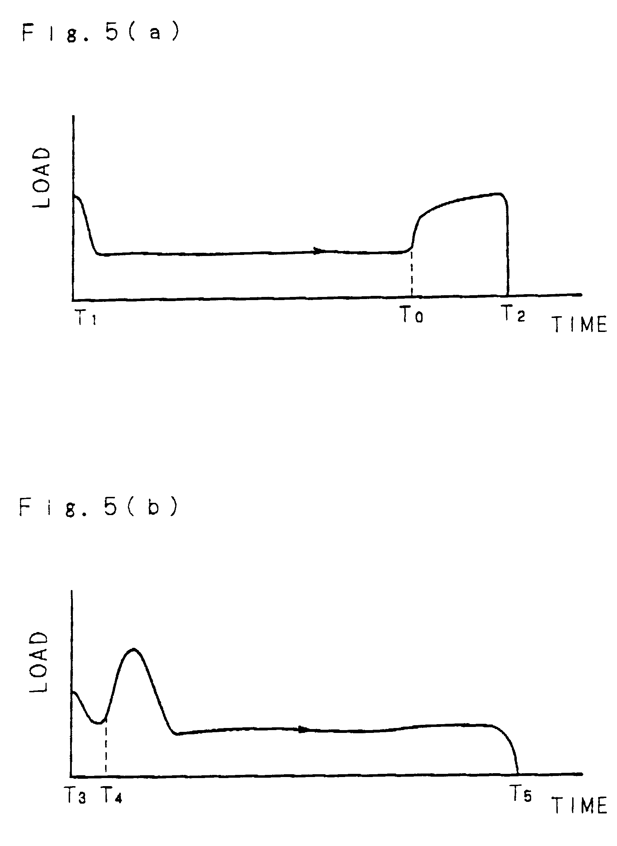

The disk loading apparatus of this invention operates in the following manner. Fig. 5 is a graph showing the change in load of the loading motor when the disk is loaded onto or unloaded from the turntable, that is, Fig. 5(a) shows the case where the disk is loaded, while Fig. 5(b) shows the case where the disk is unloaded.

In the event that the disk 15 is released from the loading state, the loading motor 1 is rotated in a normal direction. Accordingly, the worm wheel 3 and the pinion 26 are rotated to rotate the gear 25 in a direction shown by the arrow in Fig. 1, thereby moving the slider 5 towards the loading motor 1. Consequently, the pins 7, 7 engaged into the elongated holes 9, 9 are pressed upwards in correspondence to the inclination of the elongated holes 9, 9 with the holder 8 driven upwards.

Meanwhile, the holder 8 is applied with a stripping force from the coil spring 21 against the attraction force of the permanent magnet 19. Therefore, when the disk 15 is moved upwards to be detached from the turntable 18 together with the disk coating 14, necessary detaching force may be small because of the assisting stripping force of the coil spring 21. In other words, the load of the loading motor 1 is decreased once after it is increased at the start point T₃ when the slider 5 starts moving, as indicated in Fig. 5(b). Then, the load of the loading motor 1 is increased in order to resist the attraction force of the permanent magnet 19 from the time point T₄ when the disk 15 is separated from the turntable 18. However, since the resistive force against the attraction force is added to the disk casing 14 by the coil spring 21, the load shows a considerably restricted peak value smaller than the peak value indicated in Fig. 3(b). The load of the loading motor 1 is, after passing the peak, namely, without the resistive force, quickly reduced to be generally constant. At the time point T₅ when the disk 15 is released from the loading state, the load disappears.

In the event that the disk 15 is to be loaded, the slider 5 is at the position moved to the loading motor 1. In this state, when the loading motor 1 is rotated in a reverse direction, the worm wheel 3 and the pinion 26 are rotated to rotate the gear 25 in a direction opposite to the arrow direction, and the slider 5 is moved away from the loading motor 1. At the driving start T₁, the load of the loading motor 1 is increased, as is best shown in Fig. 5(a), so as to move the slider 5. As the slider 5 is moved away from the loading motor 1, the load is rapidly decreased and held generally constant. The movement of the slider 5 depresses the pins 7, 7 downwards to lower the holder 8 against the energizing force of the coil spring 21. At a time point T₀ when the coil spring 21 is depressed, the load of the loading motor 1 starts to be increased gradually. Accordingly, the disk 15 together with the disk casing 14 is moved towards the turntable 18, and the spindle shaft 20 is engaged into the shaft hole 16a of the hub 16, so that the disk 15 is in pressed contact with the turntable 18. At this time, the attraction force of the permanent magnet 19 acts on the magnetic attraction plate 17, whereby the disk 15 is pressed to the turntable 18 in the loading state. At the time point T₂ upon completion of loading, the load of the loading motor 1 disappears.

As described above, if the coil spring 21 is provided so as to apply the stripping force to the disk casing 14 against the attraction force of the permanent magnet 19, although the time period when the load of the loading motor 1 is increased in the terminal stage of loading is slightly elongated, the peak value of the load is not so much different from that in the early state of loading, thereby requiring no high output of the loading motor 1. On the other hand, when the disk 15 is unloaded, the coil spring 21 exerts an assisting force against the whole attraction force of the permanent magnet 19. Therefore, the maximum load of the loading motor 1 when the disk 15 is separated from the turntable 18 is remarkably reduced. Accordingly, the loading motor 1 can be of low output, without necessities for enlarging the reduction ratio. The disk loading apparatus can hence be compact in size, enabling quick release of the disk from the loading state.

Although it is so arranged in the foregoing embodiment that the stripping force is applied by the coil spring to the disk casing, a flat spring may be employed in a constitution to act toggle action. It is accordingly needless to say that the coil spring is a mere example of means for exerting the stripping force against the attraction force of the permanent magnet.

## Claims

1. A disk loading apparatus for loading or unloading a disk (15) accomodated in a casing (14) to or from rotating means (18), comprising :
moving means (6-9) for moving said casing (14) in a direction to and from said rotating means;
magnetic force generating means (17,19) for generating a magnetic force to attract said disk to said rotating means;
characterized in that it further comprises
resistance means (21) for applying a resistive force against said magnetic force to said casing.

2. A disk loading apparatus as claimed in Claim 1, wherein said rotating means is a turntable (18).

3. A disk loading apparatus as claimed in Claim 1, wherein said magnetic force generating means is a permanent magnet (19).

4. A disk loading apparatus as claimed in Claim 1, wherein said resistance means has a coil spring (21).

5. A disk loading apparatus as claimed in Claim 4, wherein an energizing force of said coil spring is approximately half said magnetic force.

6. A disk loading apparatus as claimed in Claim 1, further comprising a holder (8) for holding said casing.

7. A disk loading apparatus as claimed in Claim 6, wherein said moving means is connected to said holder.

8. A disk loading apparatus as claimed in Claim 6, further comprising:
a motor (11) for rotating said rotating means (18); and
a base (12) on which said motor is placed.

9. A disk loading apparatus as claimed in Claim 8, wherein said resistance means has a coil spring having one end thereof connected to said base, and a pad (22) having one face thereof coupled with the other end of said coil spring and the other face thereof pressed in contact with said holder (8).

## Patentansprüche

1. Plattenaufgabevorrichtung zum Aufgeben oder Ausgeben einer Platte (15), welche in einem Gehäuse (14) aufgenommen ist, zu und von einer Dreheinrichtung (18), welche aufweist:
eine Bewegungseinrichtung (6-9) zum Bewegen des Gehäuses (14) in eine Richtung auf die Dreheinrichtung zu und von dieser weg;
eine Magnetkraft-Erzeugungseinrichtung (17, 19) zum Erzeugen einer Magnetkraft, um die Platte in Richtung der Dreheinrichtung anzuziehen;
**dadurch gekennzeichnet,** daß sie ferner
eine Widerstandseinrichtung (21) zum Aufbringen einer Widerstandskraft auf das Gehäuse entgegen der Magnetkraft aufweist.

2. Plattenaufgabevorrichtung nach Anspruch 1, bei der die Dreheinrichtung ein Drehteller (18) ist.

3. Plattenaufgabevorrichtung nach Anspruch 1, bei der die Magnetkraft-Erzeugungseinrichtung ein Permanentmagnet (19) ist.

4. Plattenaufgabevorrichtung nach Anspruch 1, bei der die Widerstandseinrichtung eine Spiralfeder (21) ist.

5. Plattenaufgabevorrichtung nach Anspruch 4, bei der eine Wirkkraft der Spiralfeder etwa die Hälfte der Magnetkraft beträgt.

6. Plattenaufgabevorrichtung nach Anspruch 1, welche ferner einen Halter (8) zum Halten des Gehäuses aufweist.

7. Plattenaufgabevorrichtung nach Anspruch 6, bei der die Bewegungseinrichtung mit dem Halter verbunden ist.

8. Plattenaufgabevorrichtung nach Anspruch 6, welche ferner folgendes aufweist:
einen Motor (11) zum Drehantreiben der Dreheinrichtung (18); und
eine Basis (12), auf welcher der Motor angeordnet ist.

9. Plattenaufgabevorrichtung nach Anspruch 8, bei der die Widerstandseinrichtung eine Spiralfeder hat, welche ein Ende besitzt, welches mit der Basis verbunden ist, und ein Dämpfungsglied (22) vorgesehen ist, welches eine Fläche hat, welche mit dem anderen Ende der Spiralfeder verbunden ist, und eine weitere Fläche hat, welche in dem Kontaktzustand mit dem Halter (8) angedrückt ist.

## Revendications

1. Appareil de chargement de disque pour charger et décharger un disque (15) logé dans un boîtier (14) dans ou à partir de moyens de rotation (18), comprenant :
des moyens de déplacement (6-9) pour déplacer ledit boîtier (14) dans une direction allant vers lesdits moyens de rotation ou en provenant ;
des moyens de création d'une force magnétique (17, 19) pour créer une force magnétique afin d'attirer ledit disque vers lesdits moyens de rotation ;
caractérisé en ce qu'il comprend en outre des moyens de résistance (21) pour appliquer sur ledit boîtier une force résistante à l'encontre de ladite force magnétique.

2. Appareil de chargement de disque selon la revendication 1, dans lequel les moyens de rotation consistent en une platine tournante (18).

3. Appareil de chargement de disque selon la revendication 1, dans lequel les moyens de création d'une force magnétique consistent en un aimant permanent (19).

4. Appareil de chargement de disque selon la revendication 1, dans lequel les moyens de résistance comportent un ressort hélicoïdal (21).

5. Appareil de chargement de disque selon la revendication 4, dans lequel la force active dudit ressort hélicoïdal vaut approximativement la moitié de ladite force magnétique.

6. Appareil de chargement de disque selon la revendication 1, comprenant en outre un support (8) pour maintenir ledit boîtier.

7. Appareil de chargement de disque selon la revendication 6, dans lequel lesdits moyens de déplacement sont reliés audit support.

8. Appareil de chargement de disque selon la revendication 6, comprenant en outre :
un moteur (11) pour faire tourner lesdits moyens de rotation (18) ; et
une base (12) sur laquelle est placé le moteur.

9. Appareil de chargement de disque selon la revendication 8, dans lequel lesdits moyens de résistance comprennent un ressort hélicoïdal dont une extrémité est reliée à ladite base, et un coussinet (22) dont une face est accouplée avec l'autre extrémité dudit ressort hélicoïdal et dont l'autre face est poussée au contact dudit support (8).
